# EUROPEAN PATENT APPLICATION

(11) **EP 4 012 588 A1**
(43) Date of publication of application: **15.06.2022**
(21) Application number: 20849673.7
(22) Date of filing: 05.03.2020
(51) Int. Cl.: G06F 21/53, G06F 21/55

(54) **COMPUTER SYSTEM AND METHOD FOR SHARING INFORMATION**

(30) Priority: 07.08.2019 JP 2019145384
(71) Applicant: Hitachi, Ltd., Tokyo 100-8280 (JP); National Institute of Information and Communications Technology, Koganei-shi, Tokyo 184-8795 (JP)
(72) Inventor: FUJII, Shota, Tokyo 100-8280 (JP); TERADA, Masato, Tokyo 100-8280 (JP); SATOU, Takayuki, Tokyo 100-8280 (JP); AOKI, Sho, Tokyo 100-8280 (JP); SHIGEMOTO, Tomohiro, Tokyo 100-8280 (JP); KAWAGUCHI, Nobutaka, Tokyo 100-8280 (JP); TSUDA, Yu, Tokyo 1848795 (JP); KANAYA, Nobuyuki, Tokyo 1848795 (JP); YASUDA, Shingo, Tokyo 1848795 (JP); INOUE, Daisuke, Tokyo 1848795 (JP)
(74) Representative: MERH-IP Matias Erny Reichl Hoffmann Patentanwälte PartG mbB
(86) International application number: PCT/JP2020/009401
(87) International publication number: WO 2021/024532

(57) **Abstract**

A computer system comprises an analysis module configured to execute dynamic analysis for a sample of a malicious program, and to output an analysis result including a coupling destination to and from which the malicious program communicates; a variation detection module configured to detect variation of the coupling destination based on results of cyclic observation of the coupling destination, and to output a result of the detection; and an information sharing module configured to store information output from the analysis module and information output from the variation detection module in a form that allows sharing among a plurality of external computers.

## Description

The present application claims priority to JP 2019-145384 filed on August 7, 2019, the content of which is incorporated herein by reference.

### BACKGROUND OF THE INVENTION

This invention relates to a technology for sharing information required for countermeasures against cyber attack, in particular, target-type attack.

Increases in levels and types of cyber attacks and malicious programs used for the attacks have become serious threat for companies and nations. Under such circumstances, it becomes important to analyze the malicious program to capture a sign of attack, and to take preemptive countermeasures against the attack.

Malware (malicious program) used for the target-type attack, which is one type of the cyber attack, communicates to/from a server owned by an attacker, for example, a C2 server. For example, there are known communication for establishing a session with a server or a terminal of the attacker by malware designed for remote operation (for example, remote access trojan, remote access tool, and remove administration tool) and communication for uploading stolen information to the server of the attacker by the malware.

In consideration of the above-mentioned characteristics, against the attack through use of the malware, it is effective means in order to suppress the attack to quickly identify a coupling destination of the communication of the malware, and to block the communication to the coupling destination. For this purpose, there are known technologies described in JP 2014-85772 A and JP 2014-179025 A.

In JP 2014-85772 A, the following is described: "... includes an execution unit, a recording unit, a detection unit, and an identification unit. The execution unit executes a malicious program under an environment in which coupling information used for coupling to a terminal is set in advance. The recording unit records communication destinations of communication as a result of the execution of the malicious program. The detection unit detects communication to the terminal, which is executed through use of the coupling information. The identification unit identifies, from the communication destinations recorded by the recording unit, a communication destination of the malicious program executed under the environment in which the coupling information on the communication detected by the detection unit is set."

In JP 2014-179025 A, the following is described: "A coupling destination information extraction apparatus, which has a communication function for communicating to/from an external server through a network, and has blocked coupling to the network, includes software execution means for executing software, communication observation means for observing coupling operation to an external server by the software executed by the software execution means to acquire a communication log relating to the coupling operation, and coupling destination information extraction means for extracting coupling destination information on the software from a communication log acquired by the communication observation means to store the coupling destination information in coupling destination information storage means."

### SUMMARY OF THE INVENTION

In target-type attack in recent years, the attack is hidden, and, in order to avoid the analysis, frequency of communication between malware and a C2 server decreases, and a communication period also decreases. It may thus be difficult to quickly identify the coupling destination. Moreover, with the technologies described in JP 2014-85772 A and JP 2014-179025 A, it is not possible to take countermeasures in accordance with a change in state of the coupling destination and the like. For example, when a C2 server or a domain being a coupling destination is discarded by the attacker, the blocking of the communication to the coupling destination is no longer required.

Thus, it is required to obtain information required for accurate and efficient countermeasures.

Hitherto, an organization, for example, a company, has prepared for a detection mechanism and a dynamic analysis mechanism for a sample to detect transmission of malware from an attacker, and has analyzed the malware, to thereby take countermeasures. However, the cyber attack is organized, and it has thus become difficult for an individual, one company, or one nation to take countermeasures for protecting against the cyber attack. Moreover, samples that can be detected by an organization are limited, and it is thus difficult to take effective countermeasures against various threats.

Thus, there is required a system for sharing information used by a plurality of organizations to achieve protection against various threats.

This invention is to provide a system and a method for sharing information required for a plurality of organizations to take accurate and efficient countermeasures.

A representative example of the present invention disclosed in this specification is as follows: a computer system includes at least one computer including an arithmetic apparatus, a storage apparatus coupled to the arithmetic apparatus, and a communication apparatus coupled to the arithmetic apparatus. The computer system comprising: an analysis module configured to execute dynamic analysis for a sample of a malicious program relating to cyber attack, and to output an analysis result including at least a coupling destination to and from which the malicious program communicates; a variation detection module configured to detect variation of the coupling destination based on results of cyclic observation of the coupling destination, and to output a result of the detection; and an information sharing module configured to store information output from the analysis module and information output from the variation detection module in a form that allows sharing among a plurality of external computers.

According to at least one embodiment of this invention, it is possible to share the information required for the plurality of organizations to achieve accurate and efficient countermeasures. Other problems, configurations, and effects than those described above will become apparent in the descriptions of embodiments below.

### BRIEF DESCRIPTION OF THE DRAWINGS

The present invention can be appreciated by the description which follows in conjunction with the following figures, wherein:
FIG. 1 is a diagram for illustrating an example of a configuration of a computer system according to a first embodiment of this invention;
FIG. 2 is a table for showing an example of the data structure of sample information in the first embodiment;
FIG. 3 is a table for showing an example of the data structure of coupling destination information in the first embodiment;
FIG. 4 is a table for showing an example of data structure of analysis result information in the first embodiment;
FIG. 5 is a flowchart for illustrating overview of processing executed by an attack analysis/ sharing system in the first embodiment;
FIG. 6 is a flowchart for illustrating an example of analysis processing executed by the attack analysis/sharing system in the first embodiment;
FIG. 7 is a flowchart for illustrating an example of observation processing executed by the attack analysis/sharing system in the first embodiment;
FIG. 8 is a flowchart for illustrating an example of variation detection processing executed by the attack analysis/sharing system in the first embodiment;
FIG. 9 is a flowchart for illustrating an example of information sharing processing to be executed by the attack analysis/sharing system in the first embodiment;
FIG. 10 is a flowchart for illustrating an example of display processing to be executed by the attack analysis/sharing system in the first embodiment;
FIG. 11 is a flowchart for illustrating an example of communication blocking requirement determination processing to be executed by the attack analysis/sharing system in a second embodiment;
FIG. 12 is a flowchart for illustrating an example of observation cycle management processing to be executed by the attack analysis/ sharing system in a third embodiment;
FIG. 13 is a flowchart for illustrating an example of the analysis processing to be executed by the attack analysis/sharing system in a fourth embodiment; and
FIG. 14 is a flowchart for illustrating an example of report generation processing to be executed by the attack analysis/sharing system in a fifth embodiment.

### DETAILED DESCRIPTION OF THE PREFERRED EMBODIMENTS

Now, a description is given of an embodiment of this invention referring to the drawings. It should be noted that this invention is not to be construed by limiting the invention to the content described in the following embodiment. A person skilled in the art would easily recognize that a specific configuration described in the following embodiment may be changed within the scope of the concept and the gist of this invention.

In a configuration of this invention described below, the same or similar components or functions are assigned with the same reference numerals, and a redundant description thereof is omitted here.

Notations of, for example, "first", "second", and "third" herein are assigned to distinguish between components, and do not necessarily limit the number or order of those components.

The position, size, shape, range, and others of each component illustrated in, for example, the drawings may not represent the actual position, size, shape, range, and other metrics in order to facilitate understanding of this invention. Thus, this invention is not limited to the position, size, shape, range, and others described in, for example, the drawings.

### [First Embodiment]

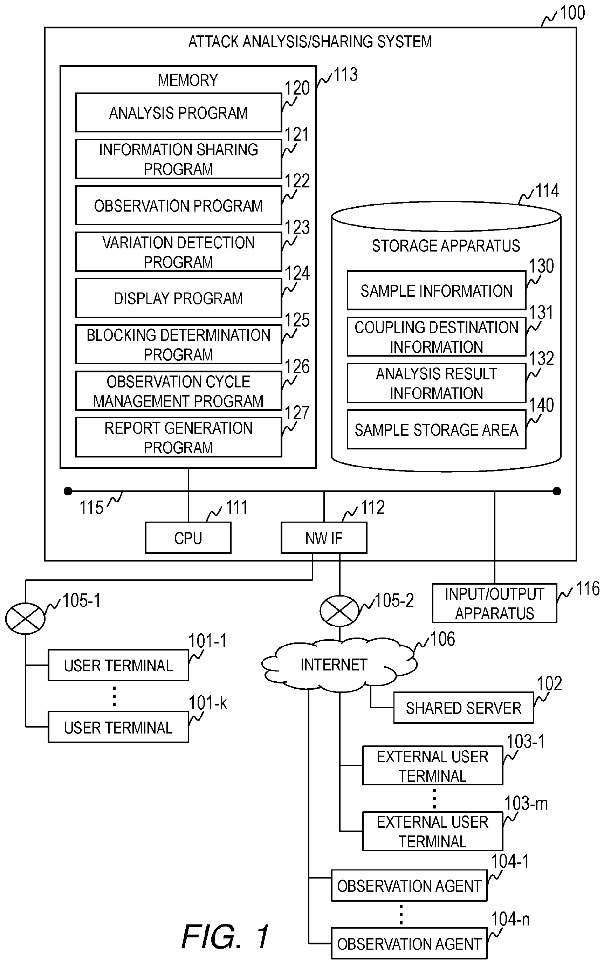

FIG. 1 is a diagram for illustrating an example of a configuration of a computer system according to a first embodiment of this invention.

The computer system includes an attack analysis/sharing system 100, a plurality of user terminals 101, a shared server 102, a plurality of external user terminals 103, and a plurality of observation agents 104. In FIG. 1, the number of the user terminals 101 is "*k*", the number of external user terminals 103 is " ", and the number of observation agents 104 is "n". It should be noted that this invention is not limited to the number of user terminals 101, the number of shared servers 102, the number of external user terminals 103, and the number of observation agents 104.

The attack analysis/sharing system 100 is coupled to the plurality of user terminals 101 through a network 105-1. Moreover, the attack analysis/sharing system 100 is coupled to the shared server 102, the plurality of external user terminals 103, and the plurality of observation agents 104 through a network 105-2 and an Internet 106.

The network 105-1 is, for example, a local area network (LAN). The network 105-2 is, for example, a wide area network (WAN). It should be noted that this invention is not limited to the types of the networks 105. Moreover, a coupling method of the network 105 may be any one of a wired coupling method and a wireless coupling method.

The user terminals 101 and the external user terminals 103 are terminals to be operated by users, and are, for example, personal computers, smartphones, and tablet computers. Each of the user terminals 101 and the external user terminals 103 includes a CPU, a memory, a storage apparatus, and a network interface (not shown). The user terminals 101 are user terminals coupled to an internal network on which the attack analysis/sharing system 100 exists. The external user terminals 103 are user terminals coupled to an external network different from the internal network.

The shared server 102 is a computer which stores, in a sharable form, information analyzed by the attack analysis/sharing system 100 and the like. The shared server 102 includes a CPU, a memory, a storage apparatus, and a network interface (not shown).

Each of the observation agents 104 is a computer which monitors coupling destinations specified by the attack analysis/sharing system 100. Each of the observation agents 104 includes a CPU, a memory, a storage apparatus, and a network interface (not shown).

The attack analysis/sharing system 100 may have the functions of the observation agent 104.

The attack analysis/sharing system 100 is a system for providing information useful for taking countermeasures against the cyber attack. The attack analysis/sharing system 100 is formed of at least one computer. In the first embodiment, it is assumed that one computer is used to implement the attack analysis/ sharing system 100. The attack analysis/ sharing system 100 includes, as hardware components, a central processing unit (CPU) 111, a network interface 112, a memory 113, and a storage apparatus 114. Each of the hardware components is coupled to one another through a communication path 115 being an information transmission medium such as a bus, a cable, or the like.

The attack analysis/sharing system 100 may be coupled to an input/output apparatus 116, which enables input and output to and from the attack analysis/sharing system 100, and is, for example, a keyboard, a mouse, a touch panel, a display, or a printer.

The CPU 111 executes programs stored in the memory 113. The CPU 111 executes processing in accordance with the program, to thereby function as a module (functional module) which implements a specific function. In the following description, when processing is described while the program is described as a subject of a sentence, the description indicates that the CPU is executing this program.

The network interface 112 is an interface for communicating to/from an external apparatus.

The memory 113 stores the programs to be executed by the CPU 111 and information to be used by the programs. Moreover, the memory 113 is also used as a work area temporarily used by the programs.

The storage apparatus 114 permanently stores a large amount of data. The storage apparatus 114 is, for example, a hard disk drive (HDD) and a solid state drive (SSD).

Description is now given of the programs stored in the memory 113 and the information stored in the storage apparatus 114 in the first embodiment.

The memory 113 stores an analysis program 120, an information sharing program 121, an observation program 122, a variation detection program 123, a display program 124, a blocking determination program 125, an observation cycle management program 126, and a report generation program 127.

The analysis program 120 is a program to be executed to analyze a malware sample, and to output analysis results including information on behaviors and characteristics of the malware sample. The information sharing program 121 is a program to be executed to store information in a form that allows the user terminals 101 and the external user terminals 103 to use the information. The observation program 122 is a program to be executed to control the observation agents 104. The variation detection program 123 is a program to be executed to detect variation of a coupling destination to and from which the malware sample communicates. The display program 124 is a program to be executed to display various types of information, for example, the analysis results of the malware sample.

The blocking determination program 125 is a program to be executed to determine whether or not blocking of the communication to the coupling destination is required. The observation cycle management program 126 is a program to be executed to manage an observation cycle of the coupling destinations of the observation agents 104. The report generation program 127 is a program to be executed to generate a report that summarizes information on the analysis of the malware samples, the observation of the coupling destinations, and the like.

A detailed description is given of the blocking determination program 125, the observation cycle management program 126, and the report generation program 127 in embodiments subsequent to the first embodiment.

In the memory 113, a program (not shown) which controls the entire attack analysis/sharing system 100 may be stored. Moreover, the analysis program 120 and the like may have a function of controlling the entire attack analysis/sharing system 100. Regarding the programs of the computer, a plurality of programs may be combined into one program, or one program may be divided into a plurality of programs each corresponding to each function.

The storage apparatus 114 stores sample information 130, coupling destination information 131, and analysis result information 132. Moreover, the storage apparatus 114 includes a sample storage area 140.

The sample storage area 140 is a storage area for storing malware samples.

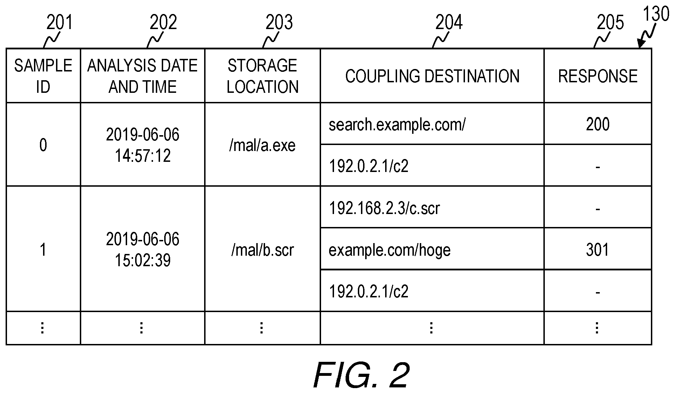

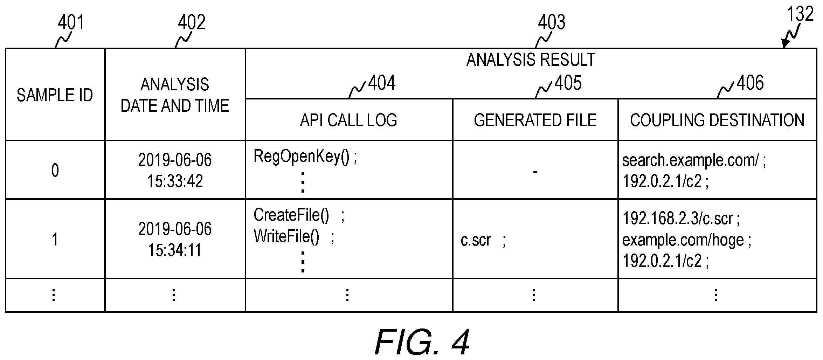

The sample information 130 is information for managing the malware samples. The analysis result information 132 is information for managing analysis results of the malware samples. Analysis results for the first time are stored in the sample information 130. Analysis results for the second and later times are stored in the analysis result information 132. With reference to FIG. 2, description is given of data structure of the sample information 130. With reference to FIG. 4, description is given of data structure of the analysis result information 132.

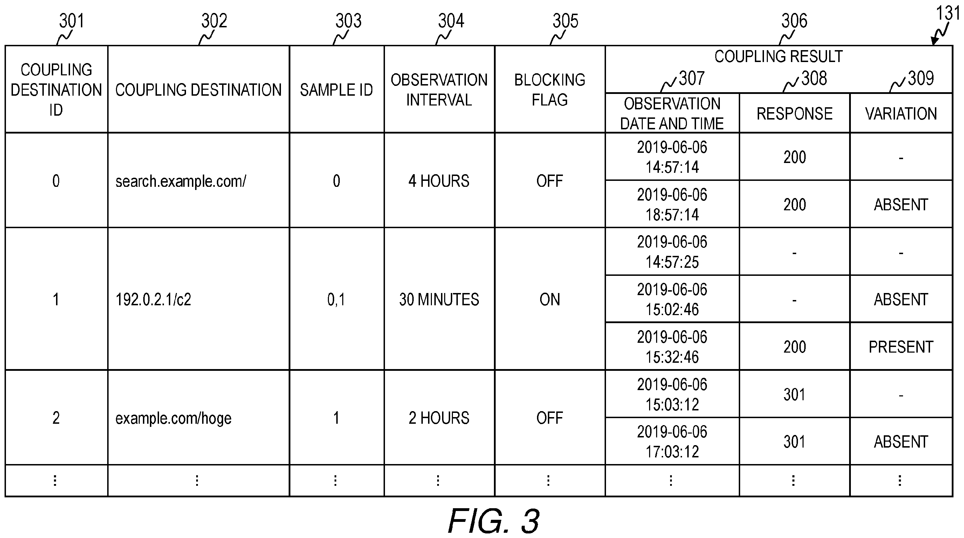

The coupling destination information 131 is information for managing the coupling destinations. With reference to FIG. 3, description is given of data structure of the coupling destination information 131.

The programs stored in the memory 113 may be stored in the storage apparatus 114 or an external apparatus coupled through the network interface 112. In this case, the CPU 111 obtains the programs from the storage apparatus 114 or the external apparatus, and loads the programs onto the memory 113.

When a plurality of computers are used to implement the attack analysis/ sharing system 100, different programs may be stored in the respective computers. The function implemented by each program may be implemented by dedicated hardware.

In the following description, the malware sample is simply referred to as "sample."

FIG. 2 is a table for showing an example of the data structure of the sample information 130 in the first embodiment.

The sample information 130 stores entries each formed of a sample ID 201, an analysis date and time 202, a storage location 203, a coupling destination 204, and a response 205. One entry exists for one sample. The structure of the entry is an example, and is not limited to this example. Of the above-mentioned fields, any of the fields may not be included, and other fields may be included.

The sample ID 201 is a field for storing identification information for uniquely identifying a sample to be analyzed. In the sample ID 201 in the first embodiment, a number is stored as the identification information. Moreover, the sample ID 201 is used also as identification information for identifying the entry of the sample information 130.

The analysis date and time 202 is a field for storing a date and a time of execution of the analysis of the sample. For example, an entry having "0" in the sample ID 201 indicates that the analysis of the sample was executed at 14:57:12 on June 6, 2019. This invention is not limited to the data format of the time stored in the analysis date and time 202. Any data format, for example, Unixtime, may be used as long as the format allows the discrimination of the time.

The storage location 203 is a field for storing information indicating a storage location of the sample in the sample storage area 140. A file path is stored in the storage location 203 in the first embodiment. For example, it is indicated that the sample corresponding to the entry having "0" in the sample ID 201 is stored at "/mal/a.exe."

The coupling destination 204 is a field for storing information on a coupling destination to which the sample attempted to communicate. A URL, an address, or the like is stored in the coupling destination 204. For example, it is indicated that the sample corresponding to the entry having "0" in the sample ID 201 attempted communication to "search.example.com/" and "192.0.2.1/c2."

The response 205 is a field for storing information on a response from the coupling destination. For example, in a case where a response including the HTTP status code 200 (OK) is detected from the coupling destination, "200" is stored in the response 205. In a case where there is no response from the coupling destination, that is, the coupling has failed, a hyphen is stored in the response 205.

FIG. 3 is a table for showing an example of the data structure of the coupling destination information 131 in the first embodiment.

The coupling destination information 131 stores entries each formed of a coupling destination ID 301, a coupling destination 302, a sample ID 303, an observation interval 304, a blocking flag 305, and a coupling result 306. One entry exists for one coupling destination. The structure of the entry is an example, and is not limited to this example. Of the above-mentioned fields, any of the fields may not be included, and other fields may be included. For example, there may be included a field for storing identification information of the observation agent 104 which observes the coupling destination.

The coupling destination ID 301 is a field for storing identification information for uniquely identifying a coupling destination. In the coupling destination ID 301 in the first embodiment, a number is stored as the identification information. Moreover, the coupling destination ID 301 is used also as identification information for identifying the entry of the coupling destination information 131.

The coupling destination 302 is a field for storing information on the coupling destination to be monitored. A URL, an address, or the like is stored in the coupling destination 302.

The sample ID 303 is a field for storing identification information of a sample which has attempted to communicate to the coupling destination stored in the coupling destination 302. The same value as the value stored in the sample ID 201 of the sample information 130 is stored in the sample ID 303. The sample information 130 and the coupling destination information 131 are associated with each other through the sample ID.

The observation interval 304 is a field for storing a cycle for observing the coupling destination. The observation program 122 instructs the observation agent 104 to observe the coupling destination based on the cycle stored in the observation interval 304. For example, for a coupling destination corresponding to an entry having "0" in the coupling destination ID 301, observation is executed at cycles of four hours.

The blocking flag 305 is a field for storing information to be used for blocking control for the communication to the coupling destination. In the blocking flag 305, any one of "ON" and "OFF" is stored. The value "ON" is a value indicating that the blocking of the communication to the coupling destination is recommended. The value "OFF" is a value indicating that the blocking of the communication to the coupling destination is not recommended.

The coupling result 306 is a group of fields for storing information on the communication between the coupling destination and the sample. The coupling result 306 includes one or more rows each formed of an observation date and time 307, a response 308, and a variation 309. One row exists for one observation result.

The observation date and time 307 is a field for storing a date and a time of execution of the observation of the coupling destination. For example, a first row of the entry having "0" in the coupling destination ID 301 indicates that the observation was executed at 14:57:14 on June 6, 2019. This invention is not limited to the data format of the time stored in the observation date and time 307. Any data format, for example, Unixtime, may be used as long as the format allows the discrimination of the time.

The response 308 is a field for storing information on a response from the coupling destination. For example, in a case where a response including the HTTP status code 200 (OK) is detected from the coupling destination by the observation agent 104, "200" is stored in the response 308. In a case where a response from the coupling destination is not observed, that is, the coupling has failed, a hyphen is stored in the response 308.

The variation 309 is a field for storing a result of determining whether or not variation of the coupling destination exists. The variation of the coupling destination is a concept including a change in state of the coupling destination itself and a change in response from the coupling destination. In the first embodiment, it is determined whether or not there exists the variation of the coupling destination based on an observation result for a previous time and an observation result for a current time.

In the variation 309, any one of "Present," "Absent," and a hyphen is stored. "Present" indicates that there is variation of the coupling destination. "Absent" indicates that there is no variation of the coupling destination. The hyphen indicates that variation of the coupling destination has not been determined. Specifically, for the observation of the first time, there is no observation result to be compared with, and the hyphen is thus stored in the variation 309 of a row corresponding to an observation result of the first time.

FIG. 4 is a table for showing an example of data structure of the analysis result information 132 in the first embodiment.

The analysis result information 132 stores entries each formed of a sample ID 401, an analysis date and time 402, and an analysis result 403. One entry exists for an analysis result of one sample. The structure of the entry is an example, and is not limited to this example. Of the above-mentioned fields, any of the fields may not be included, and other fields may be included.

The sample ID 401 is a field for storing identification information of an analyzed sample. In the sample ID 401, the same value as the value stored in the sample ID 201 of the sample information 130 is stored in the sample ID 401. The sample information 130 and the analysis result information 132 are associated with each other through the sample ID.

The analysis date and time 402 is a field for storing a date and a time of execution of the analysis of the sample. For example, a first entry indicates that the analysis of the sample was executed at 15:33:42 on June 6, 2019. This invention is not limited to the data format of the time stored in the analysis date and time 402. Any data format, for example, Unixtime, may be used as long as the format allows the discrimination of the time.

The analysis result 403 is a group of fields for storing the analysis result of the sample. The analysis result 403 includes an API call log 404, a generated file 405, and a coupling destination 406.

The API call log 404 is a field for storing information on an API call issued by the sample. For example, in the API call log 404 of the first entry, "RegOpenKey()," which is an API called by the sample to read a value of the registry, is stored. The analysis result 403 may include, in place of the API call log 404, a field for storing information that can identify an instruction called by the sample, such as a system call or a machine language.

The generated file 405 is a field for storing information on a file that has been generated by the sample. In the generated file 405 in the first embodiment, a name of the generated file is stored. For example, it is indicated that a sample corresponding to a second entry has generated a file having a name of "c.scr." In a case where a file has not been generated, a hyphen is stored in the generated file 405.

The coupling destination 406 is a field for storing information on a coupling destination to which the sample attempted to communicate. A URL, an address, or the like is stored in the coupling destination 406. For example, it is indicated that the sample corresponding to the first entry attempted communication to "search.example.com/" and " 192.0.2. 1/c2."

Description is now given of processing executed by the attack analysis/ sharing system 100.

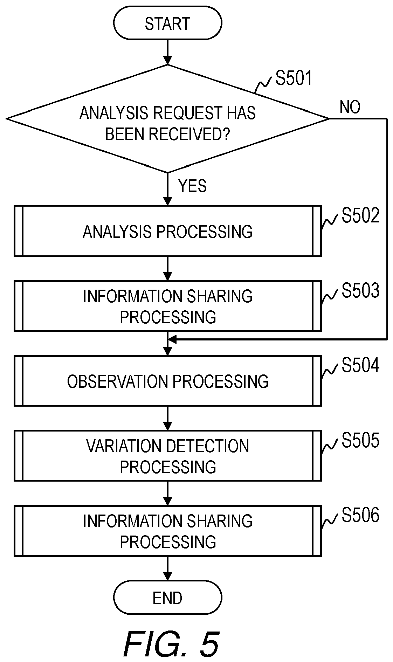

FIG. 5 is a flowchart for illustrating overview of processing executed by the attack analysis/sharing system 100 in the first embodiment.

The attack analysis/sharing system 100 periodically executes processing described below.

The attack analysis/sharing system 100 determines whether or not an analysis request has been received from the user terminal 101 or the external user terminal 103 (Step S501). In a case where the analysis program 120 of the attack analysis/sharing system 100 receives the analysis request before the start of the processing, the analysis program 120 temporarily accumulates the analysis request in the memory 113 or the storage apparatus 114. The analysis request includes a sample.

In a case where it is determined that the analysis request has not been received, the attack analysis/sharing system 100 proceeds to Step S504.

In a case where it is determined that the analysis request has been received, the attack analysis/sharing system 100 executes analysis processing (Step S502).

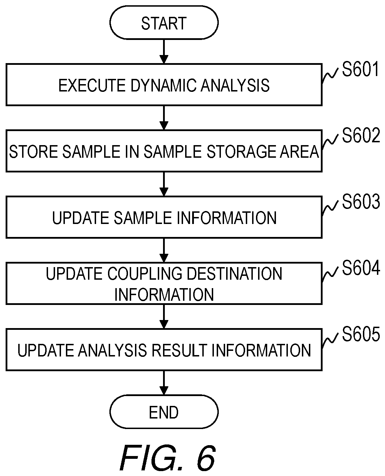

Specifically, the attack analysis/sharing system 100 outputs an instruction to execute the processing including the sample to the analysis program 120. The attack analysis/sharing system 100 executes the analysis processing, to thereby obtain an analysis result including coupling destinations to which malware attempted to communicate. With reference to FIG. 6, description is given of details of the analysis processing.

After that, the attack analysis/sharing system 100 executes information sharing processing in order to share the analysis result (Step S503), and then the process proceeds to Step S504.

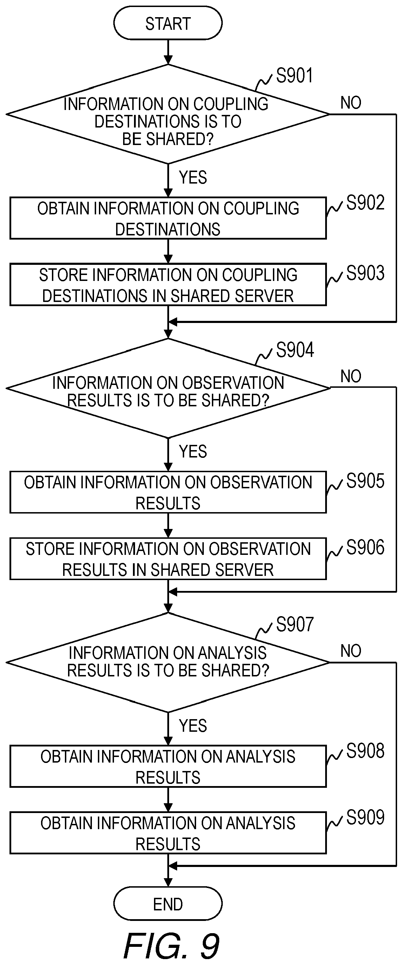

Specifically, the attack analysis/sharing system 100 outputs an execution instruction to the information sharing program 121. The attack analysis/ sharing system 100 executes the information sharing processing, to thereby be capable of storing, in the shared server 102, the analysis result in a data format that can be handled by computers, for example, the user terminals 101. With reference to FIG. 9, description is given of details of the information sharing processing.

The execution instruction includes information (reference information) for obtaining contents of update of various types of information. For example, the execution instruction includes, as the reference information, a set of the type of information to be shared and the identification information of entries. The type of the information to be shared is any one of the coupling destinations, the observation results, and the analysis results.

In a case where it is determined that the analysis request has not been received in Step S501, or after the processing step of Step S503 is executed, the attack analysis/sharing system 100 executes observation processing through use of the coupling destination information 131 (Step S504).

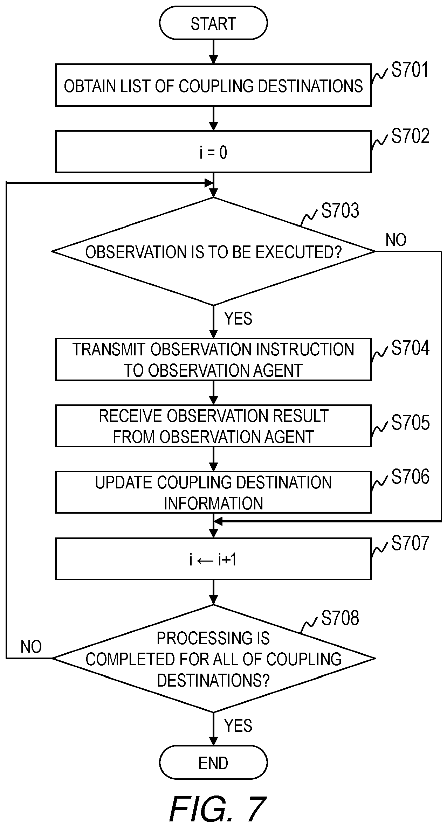

Specifically, the attack analysis/sharing system 100 outputs an execution instruction to the observation program 122 based on the observation cycle. The attack analysis/sharing system 100 executes the observation processing, to thereby obtain observation results from the observation agents 104. With reference to FIG. 7, description is given of details of the observation processing.

After that, the attack analysis/sharing system 100 executes variation detection processing through use of the observation results (Step S505).

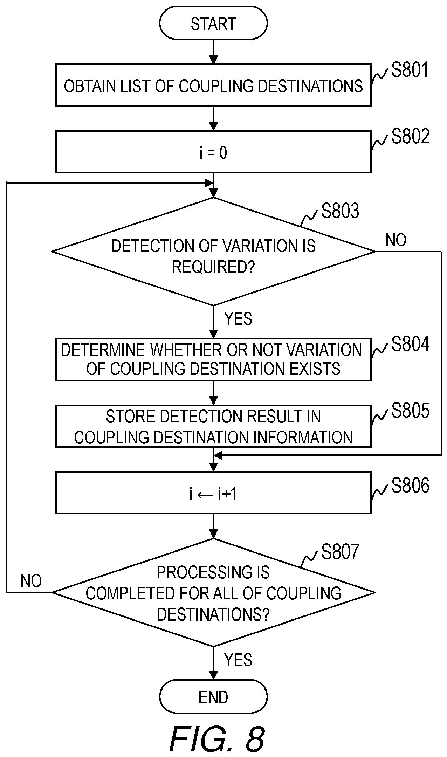

Specifically, the attack analysis/sharing system 100 outputs an execution instruction to the variation detection program 123. The attack analysis/ sharing system 100 executes the variation detection processing, to thereby detect variation of coupling destinations. With reference to FIG. 8, description is given of details of the variation detection processing.

After that, the attack analysis/sharing system 100 executes the information sharing processing in order to share the observation results (Step S506), and then finishes the series of processing steps.

Specifically, the attack analysis/sharing system 100 outputs the execution instruction to the information sharing program 121. The attack analysis/ sharing system 100 executes the information sharing processing, to thereby be capable of storing, in the shared server 102, the observation results having a data format that can be handled by computers, for example, the user terminals 101. With reference to FIG. 9, description is given of details of the information sharing processing.

The execution instruction includes the reference information. For example, the execution instruction includes, as the reference information, a set of the type of information to be shared and the identification information of entries. The type of the information to be shared is any one of the coupling destinations, the observation results, and the analysis results.

FIG. 6 is a flowchart for illustrating an example of the analysis processing executed by the attack analysis/sharing system 100 in the first embodiment.

The analysis program 120 executed by the CPU 111 starts the analysis processing described below in a case where the execution instruction including a sample is received.

The analysis program 120 executes dynamic analysis for the sample to be analyzed (Step S601). The dynamic analysis for a sample is a publicly-known technology, and a detailed description thereof is thus omitted. For example, a method of using a sandbox is conceivable as the dynamic analysis for a sample. It should be noted that this invention is not limited to the method of the dynamic analysis.

After that, the analysis program 120 stores the sample in the sample storage area 140 (Step S602).

After that, the analysis program 120 updates the sample information 130 based on the analysis result (Step S603).

Specifically, the analysis program 120 adds an entry to the sample information 130, and sets an identification number to the sample ID 201 of the added entry. The analysis program 120 stores a date and a time at which the dynamic analysis was executed in the analysis date and time 202 of the added entry, and stores, in the storage location 203, a file path of the sample stored in the sample storage area 140. Moreover, the analysis program 120 adds as many rows as the number of coupling destinations detected in the coupling destination 204 and the response 205, and stores the coupling destination and the response in each row.

After that, the analysis program 120 updates the coupling destination information 131 based on the analysis result (Step S604). Specifically, the following processing is executed.

(Step S604-1) The analysis program 120 selects a target coupling destination from the detected coupling destinations. The analysis program 120 refers to the coupling destination information 131, and determines whether or not an entry having the same value in the coupling destination 302 as the target coupling destination exists.

(Step S604-2) In a case where it is determined that an entry having the same value in the coupling destination 302 as the target coupling destination exists, the analysis program stores the identification information of the sample in the sample ID 303 of this entry.

The analysis program 120 adds a row formed of the observation date and time 307, the response 308, and the variation 309 in the coupling result 306 of the retrieved entry, and stores the analysis result in the added row. At this time, the variation 309 is a blank field. After that, the analysis program 120 proceeds to Step S604-4.

(Step S604-3) In a case where it is determined that an entry having the same value in the coupling destination 302 as the target coupling destination does not exist, the analysis program 120 adds an entry to the coupling destination information 131, and sets the identification number to the coupling destination ID 301 of the added entry. The analysis program 120 stores information on the target coupling destination in the coupling destination 302 of the added entry, and stores the identification number of the sample in the sample ID 303. The analysis program 120 stores a predetermined observation interval in the observation interval 304 of the added entry, and stores "ON" in the blocking flag 305. An initial value of the observation interval can be freely set. Moreover, "OFF" may be set as an initial value of the blocking flag 305,. However, in consideration of safety, it is desired that the blocking flag 305 be "ON."

The analysis program 120 adds a row formed of the observation date and time 307, the response 308, and the variation 309 in the coupling result 306 of the added entry, and stores the analysis result in the added row. Moreover, the analysis program 120 stores a hyphen in the variation 309 of the added row. After that, the analysis program 120 proceeds to Step S604-4.

(Step S604-4) The analysis program 120 determines whether or not the processing is completed for all of the detected coupling destinations. In a case where the processing is not completed for all of the detected coupling destinations, the analysis program 120 returns to Step S604-1, and executes the same processing. In a case where the processing is completed for all of the detected coupling destinations, the analysis program 120 finishes the processing step of Step S604. Description has been given of the processing step of Step S604.

After that, the analysis program 120 updates the analysis result information 132 based on the analysis result (Step S605), and then finishes the analysis processing.

Specifically, the analysis program 120 adds an entry to the analysis result information 132, and stores the same identification number as the sample ID 201 in the sample ID 401 of the added entry. The analysis program 120 stores a date and time of the execution of the dynamic analysis in the analysis date and time 402 of the added entry. Moreover, the analysis program 120 stores, based on the analysis result, values in the API call log 404, the generated file 405, and the coupling destination 406 of the added entry.

The coupling destination to be monitored is not limited to the coupling destination obtained from the analysis result of a sample. For example, a user may refer to cyber threat intelligence (CTI) or various logs, and directly register a coupling destination to be monitored in the coupling destination information 131.

FIG. 7 is a flowchart for illustrating an example of the observation processing executed by the attack analysis/sharing system 100 in the first embodiment.

The observation program 122 executed by the CPU 111 starts the analysis processing described below in a case where the execution instruction is received.

The observation program 122 obtains a list of the coupling destinations from the coupling destination information 131 (Step S701). It is assumed that a list including entries each formed of the coupling destination ID 301, the coupling destination 302, the observation interval 304, and the latest observation date and time is obtained in this case.

After that, the observation program 122 sets an initial value of "0" to a variable *i* (Step S702). The variable *i* is a variable indicating the identification number of the coupling destination. The observation program 122 executes processing steps of Step S703 to Step S706 for a coupling destination having the identification number matching the variable *i*. In the following description, the coupling destination having the identification number matching the variable *i* is referred to as "target coupling destination."

After that, the observation program 122 determines whether or not to observe the target coupling destination (Step S703).

Specifically, the observation program 122 determines whether or not a time obtained by adding the value of the observation interval 304 to the latest observation date and time is past the current time. In a case where the calculated time is past the current time, the observation program 122 determines to observe the target coupling destination.

In a case where it is determined not to observe the target coupling destination, the observation program 122 proceeds to Step S707.

In a case where it is determined to observe the target coupling destination, the observation program 122 transmits an observation instruction for the target coupling destination to at least one observation agent 104 (Step S704).

This invention is not limited to the number of observation agents 104 to which the observation instruction is to be transmitted. The observation agents 104 that execute the observation may be set to each coupling destination.

After that, in a case where the observation program 122 receives an observation result of the target coupling destination from the observation agent 104 (Step S705), the observation program 122 updates the coupling destination information 131 based on the observation result (Step S706), and then the process proceeds to Step S707.

Specifically, the observation program 122 searches for an entry having the coupling destination ID 301 matching the identification number of the target coupling destination, and adds a row formed of the observation date and time 307, the response 308, and the variation 309 to the coupling result 306 of the retrieved entry. The observation program 122 stores a date and time of the observation in the observation date and time 307, and stores a value included in the observation result in the response 308. At this time, the variation 309 is a blank field.

In a case where it is determined not to observe the target coupling destination in Step S703, or after the processing step of Step S706 is executed, the observation program 122 sets a value obtained by adding 1 to the variable *i* to a new variable *i* (Step S707).

After that, the observation program 122 determines whether or not the processing has been completed for all of the coupling destinations (Step S708).

Specifically, the observation program 122 determines whether or not the variable *i* is larger than the number of entries included in the list. In a case where the variable *i* is larger than the number of entries included in the list, the observation program 122 determines that the processing has been completed for all of the coupling destinations.

In a case where it is determined that the processing has not been completed for all of the coupling destinations, the observation program 122 returns to Step S703, and executes the same processing.

In a case where it is determined that the processing has been completed for all of the coupling destinations, the observation program 122 finishes the observation processing.

FIG. 8 is a flowchart for illustrating an example of the variation detection processing executed by the attack analysis/sharing system 100 in the first embodiment.

The variation detection program 123 executed by the CPU 111 starts the variation detection processing described below in a case where the execution instruction is received.

The variation detection program 123 obtains a list of the coupling destinations from the coupling destination information 131 (Step S801). It is assumed that a list including entries each formed of the coupling destination ID 301 is obtained in this case.

After that, the variation detection program 123 sets an initial value of "0" to a variable *i* (Step S802). The variable *i* is a variable indicating the identification number of the coupling destination. The variation detection program 123 executes processing steps of Step S803 to Step S805 for a coupling destination having the identification number matching the variable *i*. In the following description, the coupling destination having the identification number matching the variable *i* is referred to as "target coupling destination."

After that, the variation detection program 123 determines whether or not it is required to detect variation for the target coupling destination (Step S803).

Specifically, the variation detection program 123 searches for an entry having the coupling destination ID 301 matching the identification number of the target coupling destination, and determines whether or not a row having a blank field in the variation 309 of the coupling result 306 of this entry exists. In a case where the above-mentioned row exists, the variation detection program 123 determines that it is required to detect variation for the target coupling destination.

In a case where it is determined that variation is not required to be detected for the target coupling destination, the variation detection program 123 proceeds to Step S806.

In a case where it is determined that variation is required to be detected for the target coupling destination, the variation detection program 123 determines whether or not variation of the target coupling destination exists (Step S804).

For example, the variation detection program 123 compares the response 308 of the row having the blank field in the variation 309 and the response 308 of a previous row in the time series with each other, and determines whether or not there exists a response different from a previous response, a change in the status code, or the like. In a case where there exists a response different from a previous response, or a change in the status code, the variation detection program 123 determines that variation of the coupling destination exists.

It should be noted that this invention is not limited to the detection method for the variation of the coupling destination. For example, any processing can be used as long as the processing uses information that can evaluate the state change or the change in response of the coupling destination, such as presence or absence of robots.txt or reaction to ping.

After that, the variation detection program 123 stores the determination result in the coupling destination information 131 (Step S805).

Specifically, the variation detection program 123 searches for a row having a blank field in the variation 309. In a case where it is determined that variation of the coupling destination exists, the variation detection program 123 sets "Present" in the variation 309 of the retrieved row. In a case where it is determined that variation of the coupling destination does not exist, the variation detection program 123 sets "Absent" in the variation 309 of the retrieved row.

In a case where it is determined in Step S803 that it is not required to detect variation for the target coupling destination, or after the processing step of Step S805 is executed, the variation detection program 123 sets a value obtained by adding 1 to the variable *i* to a new variable *i* (Step S806).

After that, the variation detection program 123 determines whether or not the processing has been completed for all of the coupling destinations (Step S807).

Specifically, the variation detection program 123 determines whether or not the variable *i* is larger than the number of entries included in the list. In a case where the variable *i* is larger than the number of entries included in the list, the variation detection program 123 determines that the processing has been completed for all of the coupling destinations.

In a case where it is determined that the processing has not been completed for all of the coupling destinations, the variation detection program 123 returns to Step S803, and executes the same processing.

In a case where it is determined that the processing has been completed for all of the coupling destinations, the variation detection program 123 finishes the variation detection processing.

FIG. 9 is a flowchart for illustrating an example of the information sharing processing to be executed by the attack analysis/sharing system 100 in the first embodiment.

The information sharing program 121 to be executed by the CPU 111 starts the information sharing processing described below in a case where the execution instruction is received.

The information sharing program 121 determines whether or not to share the information on the coupling destinations (Step S901).

Specifically, the information sharing program 121 refers to the reference information, and determines whether or not the type of information to be shared is the coupling destinations.

In a case where it is determined that the information on the coupling destinations is not to be shared, the information sharing program 121 proceeds to Step S904.

In a case where it is determined that the information on the coupling destinations is to be shared, the information sharing program 121 obtains the information on the coupling destinations from the coupling destination information 131 based on the reference information (Step S902), and stores the obtained information on the coupling destinations in a machine-readable format in the shared server 102 (Step S903). After that, the information sharing program 121 proceeds to Step S904.

As the format to be used, it is conceivable to use the structured threat intelligence eXpression (STIX) or the open indicators of compromise (Open IOC), which is defined as a description format for the cyber attack. It can be expected that the information be generally utilized by using those formats. It should be noted that this invention is not limited by the type of format to be used. For example, the information may be stored in the shared server 102 in a specific file format.

Moreover, for the storage of the information in the shared server 102, a protocol, for example, trusted automatyed eXchange of indicator information (TAXII), is used.

In a case where it is determined in Step S901 that the information on the coupling destinations is not to be shared, or after the processing step of Step S903 is executed, the information sharing program 121 determines whether or not to share the information on the observation results (Step S904).

Specifically, the information sharing program 121 refers to the reference information, and determines whether or not the type of information to be shared is the observation results.

In a case where it is determined that the information on the observation results is not to be shared, the information sharing program 121 proceeds to Step S907.

In a case where it is determined that the information on the observation results is to be shared, the information sharing program 121 obtains the information on the observation results from the coupling destination information 131 based on the reference information (Step S905), and stores the obtained information on the observation results in a machine-readable format in the shared server 102 (Step S906). After that, the information sharing program 121 proceeds to Step S907.

In a case where it is determined in Step S904 that the information on the observation results is not to be shared, or after the processing step of Step S906 is executed, the information sharing program 121 determines whether or not to share the information on the analysis results (Step S907).

In a case where it is determined that information on the analysis results is not to be shared, the information sharing program 121 finishes the information sharing processing.

In a case where it is determined that the information on the analysis results is to be shared, the information sharing program 121 obtains the information on the analysis results from the analysis result information 132 based on the reference information (Step S908), and stores the obtained information on the analysis results in a machine-readable format in the shared server 102 (Step S909). After that, the information sharing program 121 finishes the information sharing processing.

In the first embodiment, the sharing of the information on the cyber attack is achieved by storing the information in the shared server 102, but the configuration is not limited to this example. For example, the sharing of the information may be achieved by publishing, to the user terminals 101 and the like, a URL to be used for access to the various types of information.

In the first embodiment, the attack analysis/sharing system 100 actively shares the information, but the information may be shared in a case where a request is received from the user.

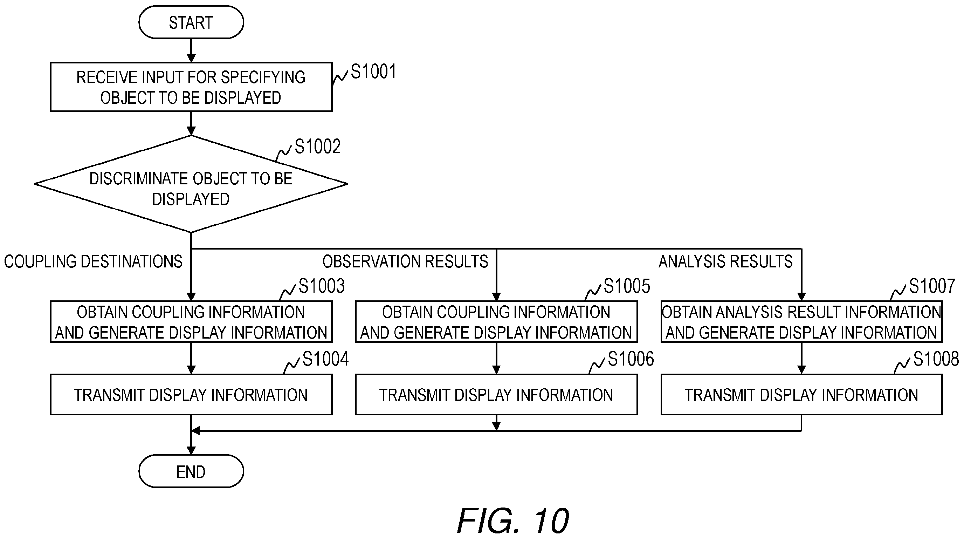

The attack analysis/sharing system 100 executes display processing of displaying the various types of information to the user independently of the processing described with reference to FIG. 5. FIG. 10 is a flowchart for illustrating an example of the display processing to be executed by the attack analysis/sharing system 100 in the first embodiment.

The display program 124 to be executed by the CPU 111 starts the display processing described below in a case where a display request is received from the user terminal 101 or the like.

The display program 124 receives input for specifying an object to be displayed from the user (Step S1001).

For example, the display program 124 displays a top page for specifying the object to be displayed on the user terminal 101 or the like. The input may include information for narrowing down the information to be displayed. For example, the input includes a coupling destination, a sample, a period, and the like.

The display program 124 discriminates the object to be displayed based on the received input (Step S1002).

In a case where the object to be displayed is determined to be coupling destinations, the display program 124 obtains the coupling destination information 131, and generates display information for displaying information on the coupling destinations (Step S1003). Further, the display program 124 transmits the generated display information to the user terminal 101 or the like (Step SI004). After that, the display program 124 finishes the display processing.

In a case where the object to be displayed is determined to be observation results, the display program 124 obtains the coupling destination information 131, and generates display information for displaying information on the observation results (Step S1005). Further, the display program 124 transmits the generated display information to the user terminal 101 or the like (Step SI006). After that, the display program 124 finishes the display processing.

In a case where the object to be displayed is determined to be analysis results, the display program 124 obtains the analysis result information 132, and generates display information for displaying information on the analysis results (Step SI007). Further, the display program 124 transmits the generated display information to the user terminal 101 or the like (Step S1008). After that, the display program 124 finishes the display processing.

It should be noted that a cause of the execution of the dynamic analysis and the like may be displayed in response to a request of the user. As the cause of the execution of the dynamic analysis, there can be conceived detection of variation of a coupling destination, reception of an analysis request of the user, and the like. As a result of the display of the above-mentioned information, it is expected that the user more efficiently interpret meaning of the display contents.

As described above, the first embodiment has the following features.
(1) The attack analysis/sharing system 100 shares the information on the coupling destinations detected by the dynamic analysis for the samples.
   The dynamic analysis can achieve quicker analysis than static analysis. Thus, it is possible to quickly provide information useful for countermeasures for preventing cyber attack. Moreover, the information is shared in the machine-readable format, and thus a protection system (not shown) that executes protection against cyber attack can achieve registration of the coupling destinations in a blacklist and quick and automatic protection based on this information. As a result, it is possible to achieve automatic and quick protection against various types of threat.
(2) The attack analysis/sharing system 100 shares the information on the detection results of the variation of coupling destinations based on the results of the continuous observation of the coupling destinations.

It is possible to accurately and precisely grasp behaviors of a sample or the coupling destination by detecting, as the variation of the coupling destination, a trigger event being activation of a C2 server to and from which the sample communicates, a change in infrastructure used by an attacker, and the like based on the results of the continuous observation of the coupling destination. The protection system can take accurate and effective countermeasures by using those pieces of information. Moreover, it is possible to take countermeasures before start of attack by using those pieces of information as a sign of the start of the attack by the attacker.

As described above, according to the first embodiment, it is possible to share the information allowing achievement of high-level and quick collective protection against various types of threat.

### [Second Embodiment]

An attack analysis/sharing system 100 in a second embodiment of this invention provides information to be used for control of blocking communication between a sample and a coupling destination. Description is now given of the second embodiment while focusing on a difference from the first embodiment.

A configuration of the computer system in the second embodiment is the same as that in the first embodiment. The hardware configuration and the software configuration of the attack analysis/sharing system 100 in the second embodiment are the same as those in the first embodiment. Data structure of the information held by the attack analysis/sharing system 100 in the second embodiment is the same as that in the first embodiment. Moreover, processing procedures to be executed by the analysis program 120, the information sharing program 121, the observation program 122, the variation detection program 123, and the display program 124 in the second embodiment are the same as those in the first embodiment.

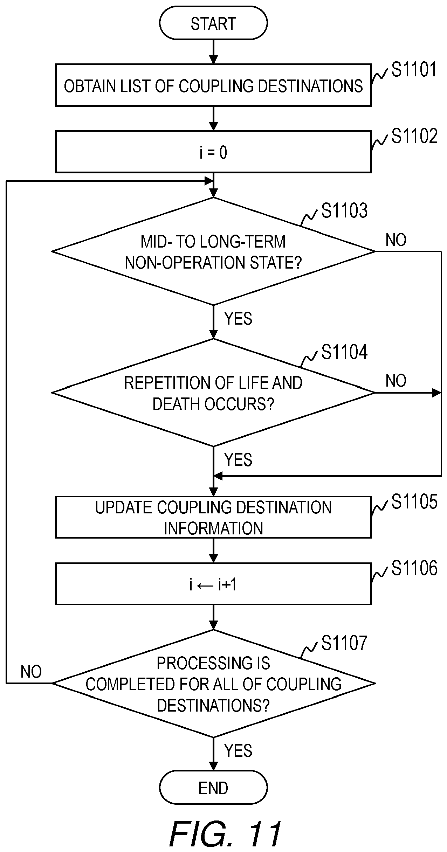

In the second embodiment, the blocking determination program 125 provides information to be used for the control of blocking the communication between the sample and the coupling destination. FIG. 11 is a flowchart for illustrating an example of the communication blocking requirement determination processing to be executed by the attack analysis/sharing system 100 in the second embodiment.

The blocking determination program 125 to be executed by the CPU 111 starts the communication blocking requirement determination processing described below in a case where an execution instruction is received or an execution cycle has elapsed. Moreover, the communication blocking requirement determination processing may be executed after the observation processing or the variation detection processing.

The blocking determination program 125 obtains a list of the coupling destinations from the coupling destination information 131 (Step S1101). In this case, it is assumed that a list including entries each formed of the coupling destination ID 301 and the coupling result 306 is obtained.

After that, the blocking determination program 125 sets an initial value of 0 to the variable *i* (Step S1102). The variable *i* is a variable indicating the identification number of the coupling destination. The blocking determination program 125 executes processing steps of Step S1103 to Step S1105 for a coupling destination having the identification number matching the variable *i*. In the following description, the coupling destination having the identification number matching the variable *i* is referred to as "target coupling destination."

After that, the blocking determination program 125 determines whether or not the target coupling destination is in a mid- to long-term non-operation state (Step S1103).

For example, the blocking determination program 125 refers to the response 308 of the target coupling destination, and determines whether or not a state in which the target coupling destination does not respond continues for one month or longer. In a case where the state in which the target coupling destination does not respond continues for one month or longer, the blocking determination program 125 determines that the target coupling destination is in the mid-term non-operation state. The above-mentioned determination method is an example, and the determination method is not limited to this example.

In a case where it is determined that the target coupling destination is not in the mid- to long-term non-operation state, the blocking determination program 125 determines that the blocking of the communication to the target coupling destination is required, and updates the coupling destination information (Step S1105). Then, the process proceeds to Step S1106.

Specifically, the blocking determination program 125 sets "ON" to the blocking flag 305 of an entry corresponding to the target coupling destination.

In a case where it is determined that the target coupling destination is in the mid- to long-term non-operation state, the blocking determination program 125 determines whether or not repetition of life and death occurs at the target coupling destination (Step S1004).

For example, the blocking determination program 125 refers to the response 308 of the target coupling destination, and determines whether or not there exist one or more of pairs of rows indicating a change from a state in which the response is received to a state in which the response is not received or a change from the state in which the response is not received to the state in which the response is received. In a case where such one or more pairs exist, the blocking determination program 125 determines that the repetition of the life and death occurs at the target coupling destination.

In a case where it is determined that the repetition of the life and death does not occur at the target coupling destination, the blocking determination program 125 determines that the blocking of the communication to the target coupling destination is required, and updates the coupling destination information (Step S1105). Then, the process proceeds to Step S1106.

Specifically, the blocking determination program 125 sets "ON" to the blocking flag 305 of the entry corresponding to the target coupling destination.

In a case where it is determined that the repetition of the life and death occurs at the target coupling destination, the blocking determination program 125 determines that the blocking of the communication to the target coupling destination is not required, and updates the coupling destination information (Step S1105). Then, the process proceeds to Step S1106.

Specifically, the blocking determination program 125 sets "OFF" to the blocking flag 305 of the entry corresponding to the target coupling destination.

In Step S 1106, the blocking determination program 125 sets a value obtained by adding 1 to the variable *i* to a new variable *i* (Step S1106).

After that, the blocking determination program 125 determines whether or not the processing has been completed for all of the coupling destinations (Step S 1107).

Specifically, the blocking determination program 125 determines whether or not the variable *i* is larger than the number of entries included in the list. In a case where the variable *i* is larger than the number of entries included in the list, the blocking determination program 125 determines that the processing has been completed for all of the coupling destinations.

In a case where it is determined that the processing has not been completed for all of the coupling destinations, the blocking determination program 125 returns to Step S1103, and executes the same processing.

In a case where it is determined that the processing has been completed for all of the coupling destinations, the blocking determination program 125 finishes the communication blocking requirement determination processing.

It should be noted that the method of determining whether or not the blocking of the communication to a target coupling destination is required, which is described with reference to FIG. 11, is an example, and the determination method is not limited to this example. For example, in a case where the coupling destination information 131 includes information indicating that the target coupling destination has been sinkholed, the blocking determination program 125 may determine that the blocking of the communication to the target coupling destination is not required.

The blocking determination program 125 may use not only the observation results, but also other information to determine whether or not the blocking of the communication to the target coupling destination is required. For example, the blocking determination program 125 checks domain name system (DNS) information, and in a case where the A/AAAA record indicating that a domain is expired is not assigned, the blocking determination program 125 determines that the blocking of the communication to the target coupling destination is not required.

The information sharing program 121 stores, as a part of the observation results, the processing results of the blocking determination program 125 in the shared server 102.

Hitherto, a coupling destination registered in a blacklist remains being registered in the blacklist without change. Thus, there is a problem in that a data size of the blacklist increases. To handle this problem, a protection system is required to determine whether or not it is required to register a coupling destination in the blacklist, to thereby suppress the increase in the data size of the blacklist.

According to the second embodiment, the attack analysis/ sharing system 100 determines whether or not the blocking of the communication to the coupling destination is required based on the results of the continuous observation of the coupling destination, and shares the determination result. As a result, the protection system can manage the blacklist based on the determination result. As a result, it is possible to suppress the increase in the data size of the blacklist, and to suppress a cost required to manage the blacklist.

### [Third Embodiment]

An attack analysis/sharing system 100 according to a third embodiment of this invention dynamically changes the observation cycle of a coupling destination based on a property and observation results of the coupling destination. Description is now given of the third embodiment while focusing on a difference from the first embodiment.

A configuration of the computer system in the third embodiment is the same as that in the first embodiment. The hardware configuration and the software configuration of the attack analysis/sharing system 100 in the third embodiment are the same as those in the first embodiment. Data structure of the information held by the attack analysis/sharing system 100 in the third embodiment is the same as that in the first embodiment. Moreover, processing procedures to be executed by the analysis program 120, the information sharing program 121, the observation program 122, the variation detection program 123, and the display program 124 in the third embodiment are the same as those in the first embodiment.

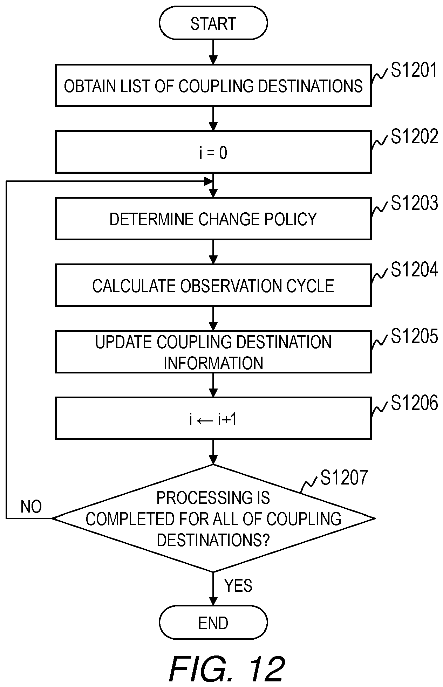

In the third embodiment, the observation cycle management program 126 dynamically changes the observation cycle of each coupling destination. FIG. 12 is a flowchart for illustrating an example of observation cycle management processing to be executed by the attack analysis/ sharing system 100 in the third embodiment.

The observation cycle management program 126 to be executed by the CPU 111 starts the communication blocking requirement determination processing described below in a case where an execution instruction is received or an execution cycle has elapsed. Moreover, the observation cycle management processing may be executed after the observation processing or the variation detection processing.

The observation cycle management program 126 obtains a list of the coupling destinations from the coupling destination information 131 (Step S1201). In this case, it is assumed that a list including entries each formed of the coupling destination ID 301, the observation interval 304, and the coupling result 306 is obtained.

After that, the observation cycle management program 126 sets an initial value of 0 to the variable *i* (Step S1202). The variable *i* is a variable indicating the identification number of the coupling destination. The observation cycle management program 126 executes processing steps of Step S1203 to Step S1205 for a coupling destination having the identification number matching the variable *i*. In the following description, the coupling destination having the identification number matching the variable *i* is referred to as "target coupling destination."

After that, the observation cycle management program 126 uses a property and observation results of the coupling destination to determine a change policy of the observation cycle (Step S1203). For example, the following processing is executed.

For example, the observation cycle management program 126 refers to the response 308 of the target coupling destination, and determines whether or not a state in which the target coupling destination does not respond continues for a long period (for, example, three months or longer),. In a case where a state in which the target coupling destination does not respond continues for a long period, it is not required to frequently observe the coupling destination. Thus, the observation cycle management program 126 determines to extend the observation cycle.
(2) The observation cycle management program 126 determines whether or not a coupling destination is associated with a domain recently obtained by an attacker. In a case where the above-mentioned condition is satisfied, it is highly likely that the attacker moves to a next attack action such as activation of a C2 server, delivery of content, and the like. Thus, the observation cycle management program 126 determines to shorten the observation cycle.
(3) In a case where variation of a coupling destination is detected, the observation cycle management program 126 determines to shorten the observation cycle. This is because it is highly likely that the attacker moves to a next attack action

In a case where none of the conditions is satisfied, the observation cycle management program 126 determines not to change the observation cycle.

Description has been given of the processing step of Step S1203.

After that, the observation cycle management program 126 calculate the observation cycle of the target coupling destination based on the determined change policy (Step S1204). Specifically, the following processing is executed.

The observation cycle management program 126 obtains the observation cycle of the current target coupling destination from the list of the coupling destinations.

In a case where it is determined to extend the observation cycle, the observation cycle management program 126 calculates an observation cycle longer than the current observation cycle. For example, the observation cycle management program 126 adds a fixed value to the current observation cycle, or multiplies the current observation cycle by a coefficient larger than 1. The above-mentioned processing is an example, and the processing is not limited to this example.

In a case where it is determined to shorten the observation cycle, the observation cycle management program 126 calculates an observation cycle shorter than the current observation cycle. For example, the observation cycle management program 126 subtracts a fixed value from the current observation cycle, or multiplies the current observation cycle by a coefficient smaller than 1. The above-mentioned processing is an example, and the processing is not limited to this example.

Description has been given of the processing step of Step S1204.

After that, the observation cycle management program 126 updates the coupling destination information (Step S1205).

Specifically, the observation cycle management program 126 stores the calculated observation cycle of the target coupling destination in the observation interval 304 of an entry corresponding to the target coupling destination.

After that, the observation cycle management program 126 sets a value obtained by adding 1 to the variable *i* to a new variable *i* (Step S1206).

After that, the observation cycle management program 126 determines whether or not the processing has been completed for all of the coupling destinations (Step S1207).

Specifically, the observation cycle management program 126 determines whether or not the variable *i* is larger than the number of entries included in the list. In a case where the variable *i* is larger than the number of entries included in the list, the observation cycle management program 126 determines that the processing has been completed for all of the coupling destinations.

In a case where it is determined that the processing has not been completed for all of the coupling destinations, the observation cycle management program 126 returns to Step S1203, and executes the same processing.

In a case where it is determined that the processing has been completed for all of the coupling destinations, the observation cycle management program 126 finishes the observation cycle management processing.

According to the third embodiment, the attack analysis/ sharing system 100 changes the observation cycle of a coupling destination based on the property and the observation results of the coupling destination. It is possible to reduce a risk in that an attacker notices the observation of the coupling destination, and to reduce resources required for the observation by extending the observation cycle of the coupling destination that has no variation over a long term. Moreover, it is possible to increase precision of the detection of attack by shortening the observation cycle of a coupling destination in which variation of the coupling destination has been detected.

### [Fourth Embodiment]

An attack analysis/sharing system 100 according to a fourth embodiment of this invention again executes the dynamic analysis for samples in a case where variation of a coupling destination is detected. Description is now given of the fourth embodiment while focusing on a difference from the first embodiment.

A configuration of the computer system in the fourth embodiment is the same as that in the first embodiment. The hardware configuration and the software configuration of the attack analysis/sharing system 100 in the fourth embodiment are the same as those in the first embodiment. Data structure of the information held by the attack analysis/sharing system 100 in the fourth embodiment is the same as that in the first embodiment. Moreover, processing procedures to be executed by the information sharing program 121, the observation program 122, and the display program 124 in the fourth embodiment are the same as those in the first embodiment.

In the fourth embodiment, in a case where variation of a coupling destination is detected, the variation detection program 123 transmits, to the analysis program 120, the execution instruction for the dynamic analysis including the information on the coupling destination.

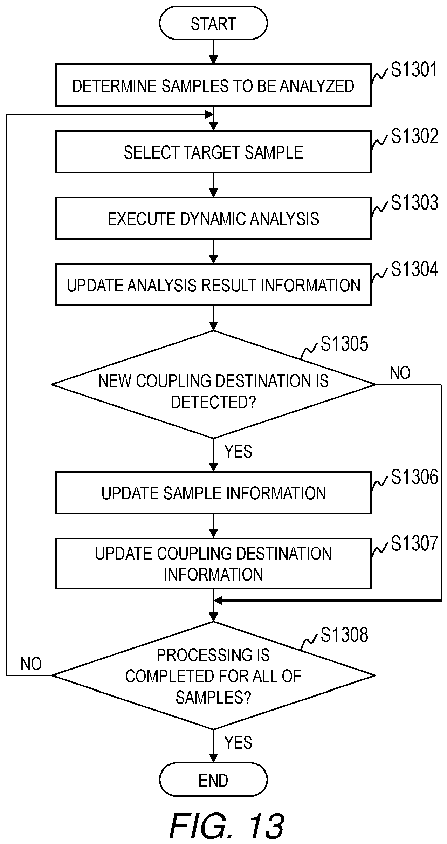

In the fourth embodiment, the analysis program 120 executes the dynamic analysis of samples in a case where there occurs a trigger event other than the reception of the analysis request, specifically, the detection of variation of a coupling destination. The analysis processing the execution of which is triggered by the reception of the analysis request is the same as that in the first embodiment. FIG. 13 is a flowchart for illustrating an example of the analysis processing to be executed by the attack analysis/ sharing system 100 in the fourth embodiment.

The analysis program 120 executed by the CPU 111 starts the analysis processing described below in a case where an execution instruction for the analysis processing is received from the variation detection program 123.

The analysis program 120 identifies samples to be analyzed (Step S1301).

Specifically, the analysis program 120 refers to the coupling destination information 131, and searches for entries each storing, in the coupling destination ID 301, the identification number included in the execution instruction for the analysis processing. The analysis program 120 obtains identification numbers of the samples from the sample IDs 303 of the retrieved entries, and registers the identification numbers in a sample list.

After that, the analysis program 120 selects a target sample from the identified samples (Step S1302).

Specifically, the analysis program 120 selects the identification number of one sample from the sample list. At this time, the analysis program 120 deletes the identification number of the sample selected from the sample list. The analysis program 120 refers to the sample information 130, and searches for an entry storing, in the sample ID 201, the identification number of the target sample. The analysis program 120 obtains the target sample from the sample storage area 140 based on the information of the storage location 203 of the retrieved entry.

After that, the analysis program 120 executes the dynamic analysis for the target sample (Step S1303). The processing step of Step S1303 is the same as the processing step of Step S601.

After that, the analysis program 120 updates the analysis result information 132 based on the analysis result (Step S1304). The processing step of Step S1304 is the same as the processing step of Step S605.

After that, the analysis program 120 determines whether or not a new coupling destination is detected (Step S1305).

For example, the analysis program 120 searches for an entry that stores the identification number of the target sample in the sample ID 201. The analysis program 120 compares the coupling destination 406 of the entry added in Step S1304 and the coupling destination 204 of the retrieved entry with each other, to thereby determine whether or not a new coupling destination is detected.

The above-mentioned determination method is an example, and the determination method is not limited to this example. For example, the analysis program 120 may refer to the coupling destination information 131, and determine whether or not an entry corresponding to the coupling destination included in the analysis result exists.

In a case where it is determined that a new coupling destination is not detected, the analysis program 120 proceeds to Step S1308.

In a case where it is determined that a new coupling destination is detected, the analysis program 120 updates the sample information 130 based on the analysis result (Step S1306).

Specifically, the analysis program 120 refers to the sample information 130, and searches for an entry storing, in the sample ID 201, the identification number of the target sample. The analysis program 120 adds a row formed of the coupling destination 204 and the response 205 to the retrieved entry, and stores the newly detected coupling destination and response in the row added based on the analysis result.

After that, the analysis program 120 updates the coupling destination information 131 based on the analysis result (Step S1307), and the process proceeds to Step S1308. Specifically, the following processing is executed.

The analysis program 120 adds an entry to the coupling destination information 131, and sets an identification number to the coupling destination ID 301 of the added entry. The analysis program 120 stores information on the new coupling destination in the coupling destination 302 of the added entry, and stores the identification number of the target sample in the sample ID 303. The analysis program 120 stores a predetermined observation interval in the observation interval 304 of the added entry, and stores "ON" in the blocking flag 305.

The analysis program 120 adds a row formed of the observation date and time 307, the response 308, and the variation 309 in the coupling result 306 of the added entry, and stores the analysis results in the added row. Moreover, the analysis program 120 stores a hyphen in the variation 309 of the added row.

Description has been given of the processing step of Step S1307.

In a case where it is determined in Step S1305 that a new coupling destination is not detected, or after the processing step of Step S1307 is executed, the analysis program 120 determines whether or not the processing has been completed for all of the identified samples (Step S1308).

In a case where it is determined that the processing has not been completed for all of the identified samples, the analysis program 122 returns to Step S1302, and executes the same processing.

In a case where it is determined that the processing has been completed for all of the identified samples, the analysis program 122 finishes the observation processing.

The analysis program 120 may execute the same processing in a case where a request for executing again the analysis request is received from the user.

The information sharing program 121 stores new analysis results in the shared server 102.

In recent years, in many cases, a C2 server that operates in association with malware operates only when attack is made. Thus, in order to accurately grasp behavior of the malware, it is required to execute the dynamic analysis during the operation of the C2 server.

According to the fourth embodiment, the attack analysis/ sharing system 100 continuously observes a coupling destination, and executes the dynamic analysis for samples in a case where variation of the coupling destination is detected as a trigger event. As a result, it is possible to accurately and precisely grasp the behavior of the samples.

### [Fifth Embodiment]

An attack analysis/ sharing system 100 in a fifth embodiment of this invention generates various types of report, and outputs the reports to the user. Description is now given of the fifth embodiment while focusing on a difference from the first embodiment.

A configuration of the computer system in the fifth embodiment is the same as that in the first embodiment. The hardware configuration and the software configuration of the attack analysis/sharing system 100 in the fifth embodiment are the same as those in the first embodiment. Data structure of the information held by the attack analysis/sharing system 100 in the fifth embodiment is the same as that in the first embodiment. Moreover, processing procedures to be executed by the analysis program 120, the information sharing program 121, the observation program 122, the variation detection program 123, and the display program 124 in the fifth embodiment are the same as those in the first embodiment.

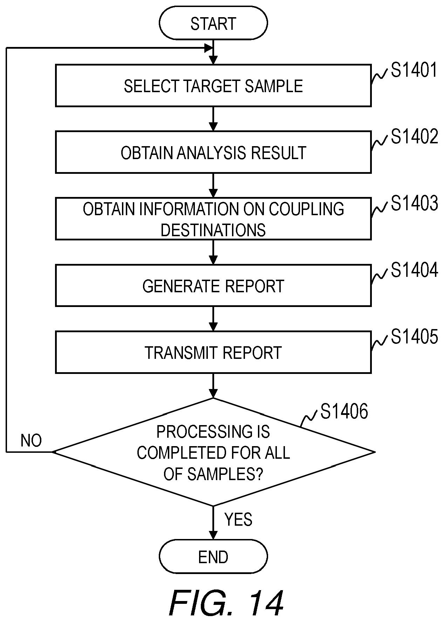

In the fifth embodiment, the report generation program 127 generates the reports. FIG. 14 is a flowchart for illustrating an example of report generation processing to be executed by the attack analysis/sharing system 100 in the fifth embodiment.

The report generation program 127 executed by the CPU 111 starts the report generation processing described below in a case where an execution cycle has elapsed or in a case where the various types of processing are finished. Description is now given of generation processing for a report for each sample.

The report generation program 127 selects a target sample for which the report is to be generated (Step S1401).

After that, the report generation program 127 obtains analysis results for the target sample from the analysis result information 132 (Step S1402).

After that, the report generation program 127 obtains information on the coupling destinations of the target sample from the sample information 130 (Step S1403).

After that, the report generation program 127 generates a report relating to the target sample based on the analysis results for the target sample and the information on the coupling destinations of the target sample (Step S1404).

After that, the report generation program 127 transmits the generated report to an external apparatus, for example, the user terminal 101 (Step S1405).

After that, the report generation program 127 determines whether or not the processing has been completed for all of the samples (Step S1406).

In a case where it is determined that the processing has not been completed for all of the samples, the report generation program 127 returns to Step S1401, and executes the same processing.

In a case where it is determined that the processing has been completed for all of the samples, the report generation program 127 finishes the report generation processing.

Description has been given of the generation processing for the report for each sample, but the report is not limited to this example. The report may be any report as long as the report can be generated through use of at least any of the sample information 130, the coupling destination information 131, and the analysis result information 132. For example, there can be conceived a report relating to a state transition of a specific coupling destination, a report relating to samples that attempt to communicate toa specific coupling destination, and the like.

According to the fifth embodiment, the attack analysis/ sharing system 100 automatically generates a report based on the observation results, the analysis results, and the like. As a result, a cost required to generate the report can be reduced. Moreover, the user refers to the report, to thereby be able to reduce a cost required to grasp a behavior of a sample or a coupling destination.

The present invention is not limited to the above embodiment and includes various modification examples. In addition, for example, the configurations of the above embodiment are described in detail so as to describe the present invention comprehensibly. The present invention is not necessarily limited to the embodiment that is provided with all of the configurations described. In addition, a part of each configuration of the embodiment may be removed, substituted, or added to other configurations.

A part or the entirety of each of the above configurations, functions, processing units, processing means, and the like may be realized by hardware, such as by designing integrated circuits therefor. In addition, the present invention can be realized by program codes of software that realizes the functions of the embodiment. In this case, a storage medium on which the program codes are recorded is provided to a computer, and a CPU that the computer is provided with reads the program codes stored on the storage medium. In this case, the program codes read from the storage medium realize the functions of the above embodiment, and the program codes and the storage medium storing the program codes constitute the present invention. Examples of such a storage medium used for supplying program codes include a flexible disk, a CD-ROM, a DVD-ROM, a hard disk, a solid state drive (SSD), an optical disc, a magneto-optical disc, a CD-R, a magnetic tape, a non-volatile memory card, and a ROM.

The program codes that realize the functions written in the present embodiment can be implemented by a wide range of programming and scripting languages such as assembler, C/C++, Perl, shell scripts, PHP, and Java.

It may also be possible that the program codes of the software that realizes the functions of the embodiment are stored on storing means such as a hard disk or a memory of the computer or on a storage medium such as a CD-RW or a CD-R by distributing the program codes through a network and that the CPU that the computer is provided with reads and executes the program codes stored on the storing means or on the storage medium.

In the above embodiment, only control lines and information lines that are considered as necessary for description are illustrated, and all the control lines and information lines of a product are not necessarily illustrated. All of the configurations of the embodiment may be connected to each other.

## Claims

1. A computer system, which includes at least one computer,
the at least one computer including an arithmetic apparatus, a storage apparatus coupled to the arithmetic apparatus, and a communication apparatus coupled to the arithmetic apparatus,
the computer system comprising:
an analysis module configured to execute dynamic analysis for a sample of a malicious program relating to cyber attack, and to output an analysis result including at least a coupling destination to and from which the malicious program communicates;
a variation detection module configured to detect variation of the coupling destination based on results of cyclic observation of the coupling destination, and to output a result of the detection; and
an information sharing module configured to store information output from the analysis module and information output from the variation detection module in a form that allows sharing among a plurality of external computers.

2. The computer system according to claim 1, further comprising:
an observation module configured to cyclically instruct at least one agent configured to observe the coupling destination to observe the coupling destination, and to output a result of the observation of the coupling destination, which has been obtained from the at least one agent; and
a blocking determination module configured to determine whether blocking of the communication to the coupling destination is required based on information output from the observation module, and to output a result of the determination,
wherein the information sharing module is configured to store the information output from the observation module and information output from the blocking determination module in a form that allows sharing among the plurality of external computers.

3. The computer system according to claim 2,
wherein the observation module is configured to instruct, based on an observation cycle set to the coupling destination, the at least one agent to observe the coupling destination, and
wherein the computer system further comprises an observation cycle management module configured to change the observation cycle based on the information output from the observation module.

4. The computer system according to claim 1,
wherein the analysis module is configured to:
determine, based on the information output from the variation detection module, whether the dynamic analysis for the sample of the malicious program that communicates to and from the coupling destination is required to execute again; and
execute the dynamic analysis for the sample of the malicious program in a case where it is determined that the dynamic analysis for the sample of the malicious program that communicates to and from the coupling destination is required to execute again, and output the analysis result, and
wherein the information sharing module is configured to store information newly output from the analysis module in a form that allows sharing among the plurality of external computers.

5. A method for sharing information in a computer system, the information is used for protection against cyber attack that uses a malicious program relating to the cyber attack,
the computer system including at least one computer including an arithmetic apparatus, a storage apparatus coupled to the arithmetic apparatus, and a communication apparatus coupled to the arithmetic apparatus,
the method for sharing information including:
a first step of executing, by the at least one computer, dynamic analysis for a sample of the malicious program, and outputting an analysis result including at least a coupling destination to and from which the malicious program communicates;
a second step of detecting, by the at least one computer, variation of the coupling destination based on results of cyclic observation of the coupling destination, and outputting a result of the detection; and
a third step of storing, by the at least one computer, the analysis result and the result of the detection in a form that allows sharing among a plurality of external computers.

6. The method for sharing information according to claim 5, further including:
a fourth step of cyclically instructing, by the at least one computer, at least one agent configured to observe the coupling destination to observe the coupling destination, and outputting a result of the observation of the coupling destination, which has been obtained from the at least one agent; and
a fifth step of determining, by the at least one computer, whether blocking of communication to the coupling destination is required based on the result of the observation of the coupling destination, and outputting a result of the determination,
wherein the third step includes storing, by the at least one computer, the result of the observation of the coupling destination and the result of the determination in a form that allows sharing among the plurality of external computers.

7. The method for sharing information according to claim 6,
wherein the fourth step includes instructing, by the at least one computer, based on an observation cycle set to the coupling destination, the at least one agent to observe the coupling destination, and
wherein the method for sharing information further includes a step of changing, by the at least one computer, the observation cycle based on the result of the observation of the coupling destination.

8. The method for sharing information according to claim 5, further including:
a step of determining, by the at least one computer, based on the result of the detection, whether the dynamic analysis for the sample of the malicious program that communicates to and from the coupling destination is required to execute again; and
a step of executing, by the at least one computer, the dynamic analysis for the sample of the malicious program in a case where it is determined that the dynamic analysis for the sample of the malicious program that communicates to and from the coupling destination is required to execute again, and outputting the analysis result,
wherein the third step includes a step of storing, by the at least one computer, the analysis result newly output in a form that allows sharing among the plurality of external computers.
